# FASCICULE DE BREVET EUROPEEN

(11) **EP 2 769 526 B1**
(45) Date de publication et mention de la délivrance du brevet: **12.12.2018**
(21) Numéro de dépôt: 12790602.2
(22) Date de dépôt: 18.10.2012
(51) Int. Cl.: H04L 29/06

(54) **PROCÉDÉ D'ÉCHANGE D'INFORMATIONS RELATIVES À DES SERVICES DE COMMUNICATION ENRICHIE**
VERFAHREN ZUM AUSTAUSCH VON INFORMATIONEN IN BEZUG AUF VERBESSERTE KOMMUNIKATIONSDIENSTE
METHOD OF EXCHANGING INFORMATION RELATING TO ENHANCED COMMUNICATION SERVICES

(30) Priorité: 21.10.2011 FR 1159547
(43) Date de publication de la demande: 27.08.2014
(73) Titulaire: Orange, 75015 Paris (FR)
(72) Inventeur: BOUVET, Bertrand, F-22700 Perros Guirec (FR)
(74) Mandataire: Fontenelle, Sandrine
(86) Numéro de dépôt international: PCT/FR2012/052380
(87) Numéro de publication internationale: WO 2013/057437

(56) Documents cités:
- EP-A1- 2 205 020
- EP-A1- 2 378 833
- EP-A1- 2 378 833
- US-A1- 2006 040 692
- "Technical Committee for IMS Network Testing (INT); IMS NNI Interoperability Test Specifications; IMS NNI interoperability test descriptions for RCS", ETSI DRAFT; TS_102901V200004_RCS_ IOP_REVMARKS, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V2.0.4, 26 août 2011 (2011-08-26), pages 1-299, XP014066779,
- "RCS-e Advanced Communications: Services and Client Specification version 1.1", , 8 avril 2011 (2011-04-08), pages 1-151, XP055031803, GSMA.COM Extrait de l'Internet: URL:http://www.gsma.com/rcs/product-specif ications/rcs-e-specifications/ [extrait le 2012-07-04]

## Description

### Arrière-plan de l'invention

L'invention se rapporte au domaine général des télécommunications.

Elle concerne plus particulièrement l'accès à des services multimédia (dits de communication enrichie) par l'intermédiaire d'un coeur de réseau de voix sur IP (Internet Protocol), en parallèle ou en marge d'une communication établie sur un réseau à commutation de circuits entre un premier équipement et un deuxième équipement, cette communication ayant été initialement émise par le premier équipement à destination d'un troisième équipement distinct du deuxième équipement et renvoyée vers le deuxième équipement.

L'invention a ainsi une application privilégiée dans le contexte du standard RCS-e (Rich Communication Services - enhanced) développé par un consortium regroupant plusieurs opérateurs de télécommunications, et décrit notamment dans le document intitulé « RCS-e Advanced Communications: Services and client spécification », version 1.1, Avril 8, 2011.

De façon connue, le standard RCS-e permet à deux terminaux enregistrés auprès d'un coeur de réseau IMS, d'établir une communication via un réseau à commutation de circuits non relié au coeur de réseau IMS (ex. via un réseau GSM (Global System for Mobile Communications)), puis en parallèle ou en marge de cette communication, d'utiliser via un réseau à commutation de paquets connecté au coeur de réseau IMS (IP Multimedia Subsystem), des services multimédia additionnels dits de communication enrichie, tels que par exemple un service de transfert de photos, un service de messagerie instantanée, un service de partage de fichiers, etc.

A cette fin, le standard RCS-e prévoit, lors notamment de la création d'un contact dans le répertoire d'un premier terminal ou de l'établissement d'une communication entre un premier terminal et un deuxième terminal, un mécanisme de découverte automatique des capacités RCS-e du deuxième terminal par le premier terminal (et inversement), basé sur l'utilisation d'un message SIP (Session Initiation Protocol) OPTIONS.

Pour illustrer ce mécanisme, on considère deux terminaux A et B, attachés à un réseau GSM et disposant de capacités RCS-e (c'est-à-dire conformes au standard RCS-e et supportant au moins un service de communication enrichie proposé dans le cadre de ce standard).

Les terminaux A et B sont également enregistrés, via le protocole SIP, auprès d'un coeur de réseau IMS gérant les services RCS-e. De façon connue, ces enregistrements permettent au coeur de réseau IMS de connaître l'adresse de contact AoCA du terminal A (ou Address of Contact en anglais), qui comprend l'adresse IP, le numéro de port et le protocole de transport permettant de joindre le terminal A, ainsi que l'adresse de contact AoCB du terminal B qui comprend l'adresse IP, le numéro de port et le protocole de transport permettant de joindre le terminal B. La correspondance entre le numéro de téléphone du terminal A, respectivement du terminal B, sur le réseau GSM et l'adresse de contact AoCA du terminal A, respectivement l'adresse de contact AoCB du terminal B, est stockée dans le contexte d'enregistrement, au niveau du coeur de réseau IMS.

On suppose maintenant que le terminal A établit une communication téléphonique avec le terminal B sur le réseau GSM. Une fois la communication établie, les deux terminaux étant compatibles avec le standard RCS-e, ils vont mettre en oeuvre un mécanisme de découverte de leurs capacités RCS-e respectives.

Pour ce faire, le terminal A échange avec le terminal B des informations relatives à leurs capacités respectives à supporter des services de communication enrichie (ou services RCS-e pour simplifier) en parallèle de la communication établie.

Plus précisément, conformément au standard RCS-e :
- le terminal A envoie au terminal B un message SIP OPTIONS, contenant notamment dans l'entête FROM le numéro de téléphone du terminal A, et dans les entêtes REQUEST URI et TO le numéro de téléphone du terminal B. Le numéro de téléphone du terminal B a été obtenu par le terminal A lors de l'opération de numérotation permettant l'établissement de la communication téléphonique avec le terminal B (par exemple sur la base des informations contenues dans une fiche de contact relative au terminal B contenue dans le répertoire du terminal A) ; et
- le terminal B envoie au terminal A un message SIP OPTIONS, contenant notamment dans l'entête FROM le numéro de téléphone du terminal B, et dans les entêtes REQUEST URI et TO le numéro de téléphone du terminal A. Le numéro de téléphone du terminal A est obtenu par le terminal B lors de la présentation de la communication téléphonique : il s'agit du numéro de l'appelant contenu dans la signalisation d'appel SETUP.

Les messages SIP OPTIONS sont acheminés vers le coeur de réseau IMS qui, disposant des adresses de contact des terminaux A et B, route ces messages SIP OPTIONS jusqu'à leurs destinataires respectifs.

Sur réception du message SIP OPTIONS envoyé par le terminal B, le terminal A vérifie que ce message provient du terminal dont il a composé le numéro pour établir la communication. De même, le terminal B vérifie que le message SIP OPTIONS reçu du terminal A provient bien du terminal dont on lui a présenté le numéro dans la signalisation d'appel SETUP.

Les terminaux A et B étant dans cet exemple engagés dans une même conversation téléphonique et compatibles RCS-e, ils répondent chacun au message OPTIONS reçus par un message de réponse SIP 200OK, identifiant les services RCS-e supportés par chacun.

Suite à la réception du message 200OK du terminal B par le terminal A, celui-ci active par exemple un service de partage de vidéos avec le terminal B.

On notera que le standard RCS-e prévoit l'envoi de messages de réponse SIP spécifiques au message SIP OPTIONS lorsque le terminal B n'est pas un terminal compatible avec le standard RCS-e (ex. message de réponse 404 NOT FOUND) ou lorsque le terminal B est compatible avec le standard RCS-e mais n'est pas enregistré auprès du coeur de réseau IMS au moment de l'envoi par le terminal A du message SIP OPTIONS, par exemple parce qu'il est éteint ou hors couverture réseau (ex. messages de réponse 480 TEMPORARILY UNAVAILABLE ou 408 TIME-OUT).

Le standard RCS-e dans son fonctionnement actuel ne prévoit pas l'accès à des services de communication enrichie lorsque la communication téléphonique émise par le terminal A n'est pas établie avec le terminal B mais est renvoyée vers un autre équipement C tel qu'un autre terminal compatible avec le standard RCS-e.

En effet, supposons par exemple que le terminal B est éteint, et a activé auprès du réseau GSM un renvoi des communications lui étant destinées vers le terminal C. Suite à l'activation de ce renvoi, la communication émise par le terminal A à destination du terminal B est établie avec le terminal C. Les terminaux A et C étant compatibles avec le standard RCS-e, ils déclenchent suite à l'établissement de la communication, un mécanisme de découverte de leurs capacités respectives comme décrit précédemment. Autrement dit :
- le terminal A envoie au terminal dont il a composé le numéro, c'est-à-dire au terminal B, un message SIP OPTIONS. Toutefois, celui-ci n'étant pas enregistré auprès du coeur de réseau IMS, un message 480 TEMPORARILY UNAVAILABLE est envoyé en réponse au terminal A ; et
- le terminal C envoie au terminal identifié dans la signalisation d'appel SETUP, c'est-à-dire au terminal A, un message SIP OPTIONS. Toutefois le terminal A ne reconnaissant pas le numéro composé dans le message SIP OPTIONS reçu répond par un message 480 TEMPORARILY UNAVAILABLE.

Par conséquent, bien que les deux terminaux A et C soient compatibles avec le standard RCS-e et qu'une communication soit établie entre ces deux terminaux sur le réseau GSM, l'accès aux services de communication enrichie en parallèle ou en marge de cette communication est impossible.

Une solution à ce manquement pourrait consister à déclencher dans le coeur de réseau IMS un serveur d'application qui serait informé du renvoi des communications destinées au terminal B vers le terminal C. Ce serveur d'application serait configuré de sorte à intercepter les différents messages échangés entre les terminaux A et C et à modifier les identifiants présents dans ces messages afin de rendre transparente pour les deux terminaux l'opération de renvoi de communication activée par le terminal B. Toutefois, une telle solution serait extrêmement complexe à mettre en oeuvre car elle nécessiterait une information en temps réel du serveur d'application sur les renvois activés dans le réseau GSM.

Le document EP 2 378 833 décrit un procédé de signalisation d'une indication de capacité d'appel enrichi dans un système de communication mobile.

Le document US 2006/0040692 décrit un procédé permettant d'initier une conférence ou un transfert d'une communication vocale via une communication courte-distance.

### Objet et résumé de l'invention

L'invention permet notamment de pallier aux inconvénients précités en proposant un procédé d'échange d'informations mis en oeuvre par un premier équipement avec un deuxième équipement tous deux étant enregistrés auprès d'un coeur de réseau de voix sur IP (ou VoIP, Voice over IP). Ce procédé comprend :
- une étape d'émission par ledit premier équipement d'une communication sur un réseau à commutation de circuits à destination d'un troisième équipement,
- une étape d'établissement de ladite communication entre le premier équipement et un deuxième équipement, distinct du troisième équipement, suite à un renvoi de ladite communication du troisième équipement vers le deuxième équipement;
- une étape de réception, par le premier équipement, sur le réseau à commutation de circuits, d'un message de confirmation de l'établissement de la communication avec le deuxième équipement, ce message de confirmation comportant un identifiant du deuxième équipement sur le réseau à commutation de circuits ; et
- une étape d'échange d'informations par le premier équipement avec le deuxième équipement, via le coeur de réseau de voix sur IP, en utilisant l'identifiant du deuxième équipement contenu dans le message de confirmation, ces informations étant relatives à une capacité du premier et/ou du deuxième équipement à supporter au moins un service multimédia dit de communication enrichie.

Corrélativement, l'invention vise également un équipement, dit premier équipement, enregistré auprès d'un coeur de réseau de voix sur IP, ce premier équipement comprenant :
- des moyens d'émission d'une communication via un réseau à commutation de circuits à destination d'un troisième équipement ;
- des moyens d'établissement de la communication avec un deuxième équipement, distinct du troisième équipement et enregistré auprès du coeur de réseau de voix sur IP, suite à un renvoi de ladite communication du troisième équipement vers le deuxième équipement;
- des moyens de réception sur le réseau à commutation de circuits, d'un message de confirmation de l'établissement de la communication avec le deuxième équipement, ce message de confirmation comportant un identifiant du deuxième équipement sur le réseau à commutation de circuits ; et
- des moyens d'échange d'informations avec le deuxième équipement, via le coeur de réseau de voix sur IP, aptes à utiliser l'identifiant du deuxième équipement contenu dans le message de confirmation, ces informations étant relatives à une capacité du premier équipement et/ou du deuxième équipement à supporter au moins un service multimédia dit de communication enrichie.

On notera qu'au sens de l'invention, un échange d'informations mis en oeuvre par un premier équipement avec un deuxième équipement désigne la transmission d'informations de ce premier équipement vers le deuxième équipement et/ou la réception par le premier équipement d'informations provenant du deuxième équipement.

Par ailleurs au sens de l'invention, on entend par « informations relatives à une capacité d'un équipement à supporter au moins un service multimédia de communication enrichie » aussi bien des informations traduisant le fait que l'équipement supporte un service de communication enrichie en marge d'une communication établie sur le réseau à commutation de circuits, que les services de communication enrichie supportés par l'équipement à proprement parler (ex. identifiants des services supportés codés conformément au standard RCS-e).

L'invention propose ainsi un mécanisme de découverte par le premier équipement des capacités du deuxième équipement avec lequel la communication est établie, qui se base non pas sur l'identifiant sur le réseau à commutation de circuits de l'équipement appelé par le premier équipement (i.e. troisième équipement au sens de l'invention), mais sur l'identifiant du deuxième équipement avec lequel la communication a été réellement établie, identifiant transmis dans un message de confirmation envoyé sur le réseau à commutation de circuits suite à l'établissement de la communication.

L'envoi d'un tel message de confirmation sur un réseau à commutation de circuits est notamment prévu par le service COLP (COnnected Line Présentation), décrit dans le document édité par l'ETSI, ETS 300 094, intitulé « Integrated Services Digital Network (ISDN) ; Connected Line Identification Présentation (COLP) supplementary service ; Service description », Janvier 1992. Plus précisément, dans le cadre du service COLP, le message de confirmation est un message CONNECT qui comporte un champ de signalisation « Connected Number » contenant l'identifiant de l'équipement sur le réseau à commutation de circuits avec lequel la communication est établie.

L'invention offre donc la possibilité, en s'appuyant sur des informations déjà échangées (ou tout du moins prévues) dans le réseau à commutation de circuits, d'accéder de façon simple à des services de communication enrichie via le coeur de réseau de voix sur IP en marge ou en parallèle d'une communication établie sur le réseau à commutation de circuits, et ce y compris en cas de renvoi de la communication vers un équipement distinct de son destinataire original.

En outre, l'invention s'applique avantageusement à tout type de renvoi. En effet, l'invention s'applique d'une part, quelle que soit la cause de l'activation du renvoi de la communication destinée au troisième équipement vers le deuxième équipement (ex. troisième équipement non enregistré auprès du coeur de réseau de voix sur IP, ou hors couverture réseau ou déjà engagé dans une communication, etc.), et d'autre part, indépendamment de l'équipement vers lequel sont renvoyées les communications.

Ainsi, notamment, le deuxième équipement peut être un terminal ou un serveur, tel que par exemple un serveur de messagerie vocale du réseau de commutation de circuits ou un PABX (Private Automatic Branch eXchange), ou tout autre type de serveur de communication.

De façon similaire, l'invention s'applique à un premier équipement et à un troisième équipement quelconques : il peut s'agir notamment de terminaux ou de serveurs.

Autrement dit, de façon générale au sens de l'invention, un équipement désigne tout type de dispositif équipé de moyens de communication sur un réseau à commutation de circuits et de moyens de communication via un coeur de réseau de VoIP. Ce dispositif peut être constitué d'une entité regroupant l'ensemble de ces moyens de communication ou de plusieurs entités distinctes équipés de moyens de communication distincts et communiquant entre elles. Ainsi par exemple, un dispositif composé d'un terminal équipé de moyens de communications sur un réseau à commutation de circuits, tel qu'un terminal téléphonique GSM, associé à un terminal équipé de moyens de communications via un coeur de réseau de VoIP, tel qu'une tablette multimédia SIP, le terminal et la tablette s'échangeant des informations (telles que par exemple l'identifiant reçu dans le message de confirmation) au travers d'une liaison sans fil courte distance de type Bluetooth, constitue un équipement au sens de l'invention.

L'invention est donc particulièrement avantageuse car les situations de renvoi des communications d'un équipement tel qu'un terminal vers un autre équipement tel que notamment un serveur de messagerie vocale sont assez fréquentes.

Or, la prévision de services de communication enrichie au niveau d'un serveur de messagerie vocale (non permis aujourd'hui), ainsi que l'échange de données multimédia entre le premier équipement et le serveur de messagerie, présentent un intérêt non négligeable : en effet, on pourrait envisager que le premier équipement, en parallèle du dépôt d'un message vocal à l'attention du troisième équipement sur le serveur de messagerie, envoie des fichiers à l'attention du troisième équipement qui seraient stockés sur le serveur de messagerie au même titre que le message vocal. Ces fichiers et le message vocal pourraient alors être consultés par le troisième équipement lorsqu'il se connecterait au serveur de messagerie.

Préférentiellement, les services identifiés dans le message de réponse du deuxième équipement sont des services compatibles avec la nature du deuxième équipement.

Notamment si le deuxième équipement est un serveur de messagerie vocale du réseau à commutation de circuits, on privilégiera les services permettant le dépôt de données multimédia en vue d'être stockées par le serveur de messagerie, comme par exemple le transfert de fichiers, le partage de photos ou de vidéo, etc. De cette façon, le premier équipement pourra déposer sur le serveur de messagerie vocale des données multimédia auxquelles le troisième équipement pourra accéder lorsqu'il consultera ultérieurement le message vocal du premier équipement enregistré lors de l'établissement de la communication avec le deuxième équipement.

Dans un mode de réalisation de l'invention, l'étape d'échange d'informations du procédé selon l'invention comporte :
- l'envoi via le coeur de réseau de voix sur IP, par le premier équipement au deuxième équipement, en utilisant l'identifiant contenu dans le message de confirmation, d'un message visant à connaître les services multimédia de communication enrichie supportés par le deuxième équipement ; et
- la réception par le premier équipement, via le coeur de réseau de voix sur IP, d'un message de réponse du deuxième équipement identifiant le cas échéant les services multimédia de communication enrichie supportés par le deuxième équipement.

Ceci permet au premier équipement d'activer des services de communication enrichie lors de la communication établie avec le deuxième équipement adaptés aux capacités du deuxième équipement.

Dans un autre mode de réalisation de l'invention, l'étape d'échange d'informations comporte :
- la réception, par le premier équipement via le coeur de réseau de voix sur IP, d'un message du deuxième équipement visant à connaître les services multimédia de communication enrichie supportés par le premier équipement ;
- la vérification que ce message provient de l'équipement identifié dans le message de confirmation de l'établissement de la communication ; et
- en cas de vérification positive, l'envoi par le premier équipement via le coeur de réseau de voix sur IP d'un message de réponse au deuxième équipement identifiant le cas échéant les services multimédia de communication enrichie supportés par le premier équipement.

Réciproquement, le deuxième équipement avec lequel est établie la communication est informé des capacités du premier équipement. En outre, la vérification opérée par le premier équipement permet de s'assurer que l'équipement à l'origine du message est bien l'équipement avec lequel la communication est établie.

Dans un mode particulier de réalisation, les différentes étapes du procédé d'échange d'informations sont déterminées par des instructions de programmes d'ordinateurs.

En conséquence, l'invention vise aussi un programme d'ordinateur sur un support d'informations, ce programme étant susceptible d'être mis en oeuvre dans un équipement conforme à l'invention ou plus généralement dans un ordinateur, ce programme comportant des instructions adaptées à la mise en oeuvre des étapes d'un procédé d'échange d'informations tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un autre aspect, l'invention vise également un système comprenant :
- un premier équipement conforme à l'invention, enregistré auprès d'un coeur de réseau de voix sur IP ; et
- un deuxième équipement enregistré auprès du coeur de réseau de voix sur IP ;
le premier équipement ayant émis une communication sur un réseau à commutation de circuits à destination d'un troisième équipement distinct du deuxième équipement, cette communication ayant été renvoyée vers le deuxième équipement et établie avec le deuxième équipement.

Le deuxième équipement du système selon l'invention est par exemple un terminal ou un serveur de messagerie vocale du réseau à commutation de circuits.

Ainsi, selon un autre aspect, l'invention vise un serveur de messagerie vocale d'un réseau à commutation de circuits, enregistré auprès d'un coeur de réseau de voix sur IP, ledit serveur de messagerie étant apte à mettre en oeuvre, en parallèle ou en marge d'une communication établie sur le réseau à commutation de circuits avec un premier équipement conforme à l'invention, des services multimédia de communication enrichie.

Le système et le serveur de messagerie vocale disposent des mêmes avantages que ceux décrits précédemment pour le procédé d'échange d'information selon l'invention.

On peut également envisager, dans d'autres modes de réalisation, que le procédé d'échange d'informations, l'équipement, le serveur de messagerie et le système selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un système et un équipement T1 conformes à l'invention dans un mode particulier de réalisation ;
- la figure 2 représente, de façon schématique, l'architecture matérielle de l'équipement T1 représenté sur la figure 1, dans un mode particulier de réalisation ; et
- la figure 3 représente les principales étapes d'un procédé d'échange d'informations conforme à l'invention, dans un mode particulier de réalisation dans lequel il est mis en oeuvre par l'équipement T1 de la figure 1.

### Description détaillée d'un mode de réalisation

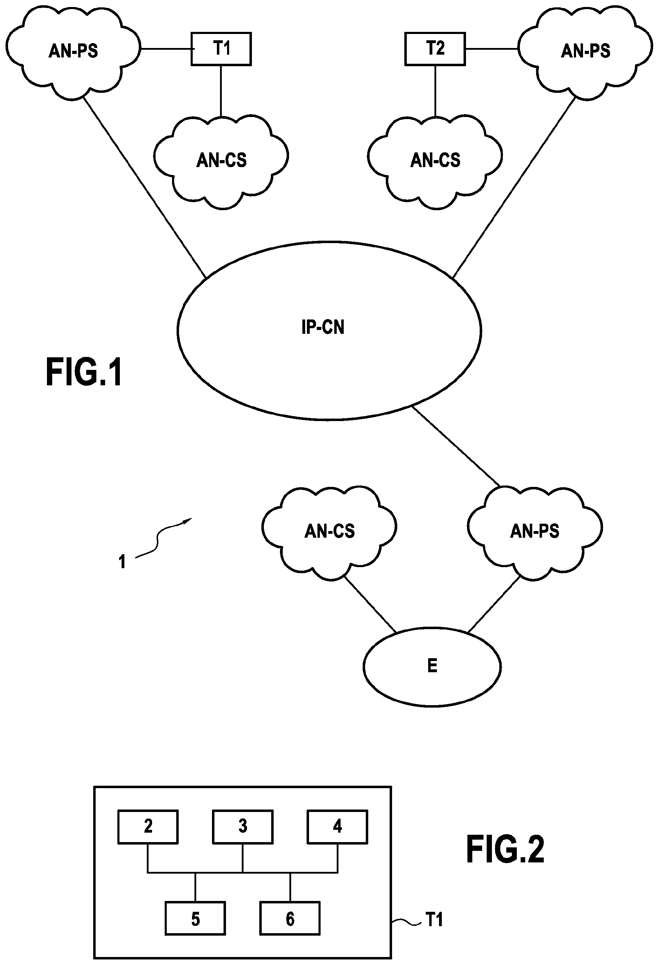

La **figure 1** représente, dans son environnement, un système 1 conforme à l'invention, dans un mode particulier de réalisation.

Le système 1 permet la mise en oeuvre de services multimédia de communication enrichie via un réseau d'accès AN-PS à commutation de paquets connecté à un coeur de réseau de voix sur IP (VoIP), IP-CN, en parallèle ou en marge d'une communication téléphonique (i.e. un appel) émise sur un réseau d'accès AN-CS à commutation de circuits non relié ici au coeur de réseau de VoIP, et ce, y compris dans des situations de renvoi de la communication téléphonique vers un équipement E distinct du destinataire initial de la communication.

Dans l'exemple décrit ici, on envisage plus particulièrement une communication émise sur le réseau d'accès AN-CS par un terminal T1 conforme à l'invention, à destination d'un terminal T2 ayant activé un renvoi d'appel (i.e. renvoi des communications qui lui sont destinées) vers un équipement E. L'invention s'appliquant indépendamment des critères déclenchant le renvoi d'appel, ceux-ci ne seront pas décrits dans le détail ici.

Autrement dit, le terminal T1 est un premier équipement au sens de l'invention, l'équipement E est un deuxième équipement au sens de l'invention et le terminal T2 est un troisième équipement au sens de l'invention.

L'invention s'applique toutefois à des équipements T1 et T2 quelconques aptes à communiquer sur le réseau AN-CS, comme par exemple à des serveurs tels que des serveurs PABX ou tout autre type de serveurs de communication.

Dans le mode de réalisation décrit ici, le coeur de réseau de voix sur IP IP-CN est un coeur de réseau IMS, le réseau d'accès AN-CS un réseau GSM, et le réseau d'accès AN-PS un réseau UMTS (Universal Mobile Télécommunication System). Les services multimédia de communication enrichie sont par exemple les services proposés dans le cadre du standard RCS-e et définis dans le document intitulé « RCS-e Advanced Communications: Services and client spécification », version 1.1, Avril 8, 2011.

Ces hypothèses ne sont toutefois pas limitatives, l'invention s'appliquant à d'autres architectures de coeur de réseau VoIP (ex. H323, MGCP (Media Gateway Control Protocol), Peer2Peer), ainsi qu'à d'autres réseaux d'accès à commutation de circuits (ex. CDMA (Code Division Multiple Access)) ou de paquets (ex. HSPA (High Speed Packet Access)).

Par ailleurs, l'invention s'applique également lorsque le terminal T1, le terminal T2 et/ou l'équipement E sont connectés à des coeurs de réseau IP distincts, éventuellement via des réseaux d'accès également distincts.

Conformément à l'invention, le système 1 comprend le terminal T1 ainsi que l'équipement E, T1 et E étant aptes à établir des communications via le réseau AN-CS et à s'enregistrer auprès du coeur de réseau IMS IP-CN via l'utilisation du protocole SIP, de façon connue en soi. L'équipement E est par exemple un terminal ou un serveur conforme à l'invention de messagerie vocale du réseau AN-CS disposant en outre de moyens de communications sur le coeur de réseau IMS.

Dans le mode de réalisation ici, on suppose que le service COLP dit de présentation de la ligne connectée, défini dans le document ETS 300 094 édité par l'ETSI, est disponible et activé sur le réseau AN-CS pour le terminal T1. De façon connue, ce service indique à l'émetteur d'une communication l'identité de l'équipement avec lequel la communication a été effectivement établie, via notamment un message CONNECT. On suppose en outre que le service COLR (COnnected Line Restriction) qui permet de s'opposer à la présentation par le réseau à commutation de circuits de l'identifiant de la ligne obtenue au terminal appelant, n'est pas activé pour l'équipement E (que ce soit par l'opérateur du réseau AN-CS de l'équipement E ou par l'utilisateur de l'équipement E ou encore par l'utilisateur du terminal T2 si l'équipement E est un serveur de messagerie vocale, etc.).

On suppose par ailleurs que le terminal T1 et l'équipement E supportent un ou plusieurs services multimédia de communication enrichie définis par le standard RCS-e, tels que par exemple un service de transfert de fichiers multimédia, un service de partage de photos, un service de messagerie instantanée, etc.

Bien entendu, les services supportés par le terminal T1 et l'équipement E dépendent de la nature et des capacités de ces équipements (ex. terminal mobile, ordinateur portable, serveur de messagerie, etc.). Typiquement lorsque l'équipement E est un serveur de messagerie vocale, on comprend bien que celui-ci n'est pas apte à supporter tout type de services, et en particulier des services requérant une interaction en temps réel. En revanche, un serveur de messagerie vocale peut aisément être configuré de sorte à supporter des services de stockage de fichiers ou de partage de vidéos avec un autre équipement.

On notera que dans l'exemple envisagé ici, par souci de simplification, seul T1 met en oeuvre le procédé d'échange d'informations selon l'invention, en tant qu'émetteur d'une communication sur le réseau AN-CS à destination d'un terminal T2. Toutefois bien entendu, on pourrait envisager que le terminal T2 et l'équipement E mettent également en oeuvre le procédé d'échange d'informations de l'invention et soient des terminaux conformes à l'invention.

Le terminal T1 dispose ici de l'architecture matérielle d'un ordinateur telle que représentée schématiquement sur la **figure 2****.** Il comporte notamment un processeur 2, une mémoire vive 3, une mémoire morte 4, et des moyens de communication 5 sur le réseau à commutation de circuits AN-CS, et des moyens de communication 6 sur le réseau à commutation de paquets AN-PS (intégrant notamment des moyens de communication selon le protocole SIP), connus en soi.

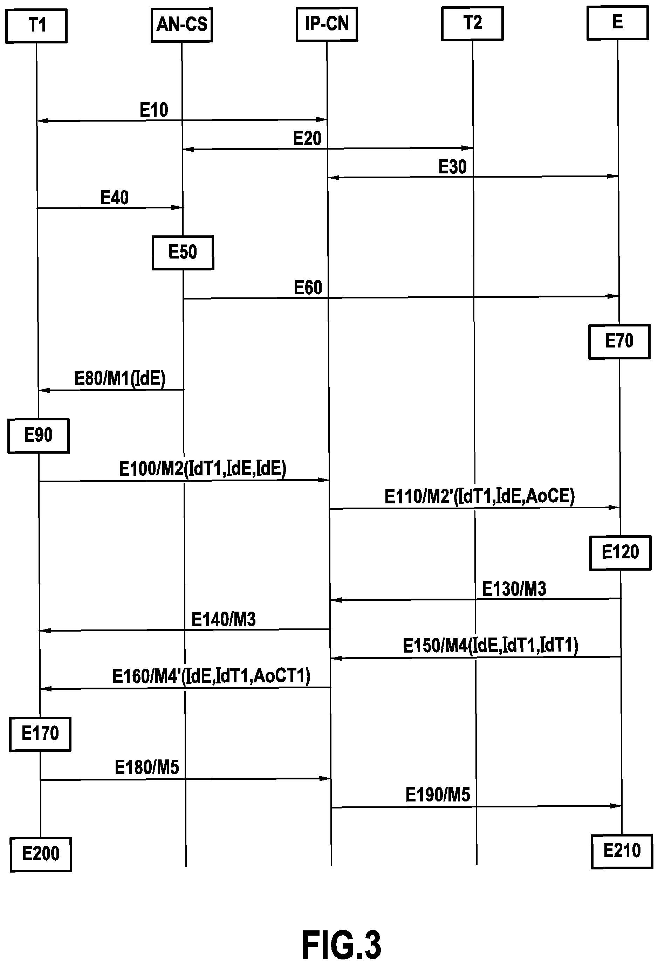

La mémoire morte 4 du terminal T1 constitue un support d'enregistrement conforme à l'invention, lisible par le processeur 2 et sur lequel est enregistré un programme d'ordinateur conforme à l'invention, comportant des instructions pour l'exécution des étapes d'un procédé d'échange d'informations conforme à l'invention, décrites maintenant en référence à la **figure 3****.**

On suppose en préalable que le terminal T1 est allumé : après s'être attaché au réseau AN-CS (non représenté sur la figure 1), T1 s'enregistre auprès du coeur de réseau IP-CN de façon connue en soi à l'aide d'un message SIP REGISTER émis sur le réseau AN-PS (étape E10). Cet enregistrement permet au coeur de réseau IP-CN de connaître l'adresse de contact (ou de joignabilité) AoCT1 du terminal T1 qui comprend notamment l'adresse IP, le numéro de port, et le protocole de transport de joignabilité du terminal T1. De façon connue en soi, la correspondance entre cette adresse de contact AoCT1 et un identifiant IdT1 du terminal T1 sur le réseau AN-CS (i.e. son numéro de téléphone) est stockée dans le contexte d'enregistrement du terminal A, maintenu par le coeur de réseau IP-CN.

En parallèle, on suppose que le terminal T2 active auprès du réseau AN-CS un renvoi des communications qui lui sont destinées émises sur ce réseau (étape E20). Le renvoi peut être effectif de manière inconditionnelle, ou en variante sur détection de certains critères comme par exemple en cas de non réponse du terminal T2, lorsque le terminal T2 se trouve en dehors de la couverture du réseau AN-CS, en cas de refus de la communication par le terminal T2, etc.

On suppose également ici que l'équipement E est allumé. L'équipement E est attaché de manière permanente au réseau AN-CS s'il s'agit d'un serveur de messagerie vocale ou après chaque allumage s'il s'agit d'un terminal (non représenté sur la figure 1). L'équipement E s'enregistre auprès du coeur de réseau IP-CN à l'aide d'un message SIP REGISTER émis sur le réseau AN-PS (étape E30). Cet enregistrement permet au coeur de réseau IP-CN de connaître l'adresse de contact AoCE de l'équipement E, qui comprend l'adresse IP, le numéro de port, et le protocole de transport de joignabilité de l'équipement E. La correspondance entre cette adresse de contact AoCE et un identifiant IdE de l'équipement E sur le réseau AN-CS (i.e. son numéro de téléphone) est stockée dans le contexte d'enregistrement de l'équipement E, maintenu par le coeur de réseau IP-CN.

On suppose maintenant que le terminal T1 émet une communication téléphonique sur le réseau d'accès AN-CS à destination du terminal T2 (étape E40), par exemple à l'aide de son répertoire téléphonique.

Sur détection du renvoi activé sur le réseau AN-CS par le terminal T2 des communications qui lui sont destinées (étape E50), la communication est routée par le réseau AN-CS vers l'équipement E (étape E60).

On suppose que la communication est acceptée par l'équipement E (ex. l'utilisateur de l'équipement E décroche s'il s'agit d'un terminal, ou l'appel est pris automatiquement s'il s'agit d'un serveur de messagerie vocale) (étape E70). La communication est alors établie entre le terminal T1 et l'équipement E sur le réseau AN-CS.

Suite à l'établissement de cette communication, conformément au service COLP, le réseau AN-CS transmet au terminal T1 l'identifiant IdE de l'équipement E sur le réseau AN-CS dans un message M1 de confirmation de l'établissement de la communication (étape E80). Le message M1 est ici un message CONNECT conforme au service COLP, comportant un champ de signalisation « Connected Number » dans lequel se trouve l'identifiant IdE.

En outre, la communication téléphonique étant établie entre le terminal T1 et l'équipement E, ces derniers déclenchent un processus de découverte de leurs capacités respectives quant au support de services de communication enrichie RCS-e en parallèle ou en marge (ex. à l'issue) de la communication téléphonique.

Plus précisément, le terminal T1, sur réception du message CONNECT, extrait de ce message l'identifiant IdE de l'équipement avec lequel la communication a été établie (étape E90).

Puis, il met en oeuvre un échange d'informations avec l'équipement E, via le coeur de réseau IP-CN et le réseau AN-PS, visant à identifier leurs capacités respectives à supporter des services de communication enrichie (ou inversement l'absence de support de services RCS-e). Ces informations constituent des informations relatives à une capacité du terminal T1 et/ou de l'équipement E à supporter au moins un service multimédia de communication enrichie géré par le coeur de réseau IP-CN au sens de l'invention.

A cette fin, le terminal T1 émet sur le réseau AN-PS un message M2 à destination de l'équipement E en utilisant l'identifiant IdE extrait du message M1 (étape E100) : le message M2 est un message SIP OPTIONS contenant dans l'entête FROM l'identifiant IdT1, et dans les entêtes Request URI et TO, l'identifiant IdE. Il vise à connaître les services multimédia de communication enrichie gérés par le coeur de réseau IP-CN et supportés le cas échéant par l'équipement E.

Le message M2 est transmis jusqu'au coeur de réseau IP-CN : le coeur de réseau IP-CN connaissant l'adresse de contact de l'équipement E destinataire du message M2, route ce message sous la forme d'un message modifié M2' jusqu'à l'équipement E (étape E110). Le message M2' correspond au message M2 dans lequel l'identifiant IdE présent dans l'entête Request URI a été remplacé par l'adresse de contact AoCE.

Sur réception du message M2', l'équipement E disposant par ailleurs de l'identifiant IdT1 du terminal T1 à l'origine de la communication établie sur le réseau AN-CS (par l'intermédiaire de la signalisation SETUP envoyé à l'équipement E lors de l'établissement de la communication), détecte que l'entête FROM du message M2' contient également cet identifiant IdT1 (étape E120). Autrement dit, il détecte que l'identifiant du terminal présent dans le message M2' désigne bien le terminal avec lequel une communication est établie sur le réseau AN-CS.

Suite à cette détection, l'équipement E supportant par ailleurs des services multimédia de communication enrichie RCS-e répond favorablement au terminal T1 en envoyant un message de réponse M3 au terminal T1 via le réseau AN-PS (étape E130). Le message M3 est un message SIP 200OK contenant les services de communication enrichie supportés par l'équipement E (codés spécifiquement conformément au standard RCS-e), autrement dit ici les capacités RCS-e de l'équipement E.

En variante, si l'équipement E ne supporte pas de services RCS-e, le coeur de réseau IP-CN envoie un message M3 de réponse SIP 404 NOT FOUND au terminal T1. De façon similaire, si l'identifiant extrait de la signalisation SETUP ne correspond pas à l'identifiant reçu dans le message M2', l'équipement E envoie au terminal T1 un message M3 de réponse SIP 480 TEMPORARILY UNAVAILABLE.

Le message de réponse M3 est routé jusqu'au terminal T1 via le réseau AN-PS et le coeur de réseau IP-CN (étape E140).

De son côté, l'équipement E extrait du message SETUP reçu lors de l'établissement de la communication avec T1, l'identifiant IdT1 du terminal T1 sur le réseau AN-CS.

Puis il émet sur le réseau AN-PS un message M4 à destination du terminal T1 en utilisant l'identifiant IdT1 extrait du message SETUP (étape E150) : le message M4 est un message SIP OPTIONS contenant dans l'entête FROM l'identifiant IdE, et dans les entêtes Request URI et TO, l'identifiant IdT1. Il vise à connaître les services multimédia de communication enrichie gérés par le coeur de réseau IP-CN et supportés par le terminal T1.

Le message M4 est transmis jusqu'au coeur de réseau IP-CN : le coeur de réseau IP-CN connaissant l'adresse de contact du terminal T1 destinataire du message M4, route ce message sous la forme d'un message modifié M4' jusqu'au terminal T1 (étape E160). Le message M4' correspond au message M4 dans lequel l'identifiant IdT1 présent dans l'entête Request URI a été remplacé par l'adresse de contact AoCT1.

Sur réception du message M4', le terminal T1 vérifie que l'identifiant IdE présent dans le champ FROM du message M4' correspond à l'identifiant IdE présent dans le message de confirmation CONNECT (étape E170). Autrement dit, le terminal T1 vérifie que le message M4' provient bien de l'équipement E identifié dans le message M1 de confirmation d'établissement de la communication, c'est-à-dire de l'équipement avec lequel la communication est établie sur le réseau AN-CS.

Le cas échéant, le terminal T1 supportant par ailleurs des services multimédia de communication enrichie RCS-e envoie un message de réponse M5 favorable à l'équipement E via le réseau AN-PS (étape E180). Le message M5 est ici un message SIP 200OK contenant les services de communication enrichie supportés par le terminal T1 (codés spécifiquement conformément au standard RCS-e), autrement dit ici, les capacités RCS-e du terminal T1.

En variante, si le terminal T1 ne supporte pas de services RCS-e, le coeur de réseau IP-CN envoie un message M5 de réponse SIP 404 NOT FOUND à l'équipement E. De façon similaire, si l'identifiant extrait du message CONNECT ne correspond pas à l'identifiant reçu dans le message M4', le terminal T1 envoie à l'équipement E un message M5 de réponse SIP 480 TEMPORARILY UNAVAILABLE.

Le message de réponse M5 est routé jusqu'à l'équipement E via le réseau AN-PS et le coeur de réseau IP-CN (étape E190).

Sur réception des messages 200OK, le terminal T1, respectivement l'équipement E, active, par exemple via une interface homme-machine, les services RCS-e compatibles entre le terminal T1 et l'équipement E, autrement dit supportés par le terminal T1 et par l'équipement E (étapes E200 et E210). Si l'un des utilisateurs du terminal T1 et/ou de l'équipement E déclenche un service RCS-e compatible, une session SIP est alors établie entre le terminal T1 et l'équipement E via le réseau AN-PS et le coeur de réseau IP-CN pour la mise en oeuvre de ce service, comme décrit notamment dans le standard RCS-e.

On notera que la description précédente présente un mode de réalisation de l'invention pouvant s'appliquer à un équipement quelconque E (ex. terminal ou serveur de messagerie).

Dans le cas où l'équipement E est un serveur de messagerie du réseau AN-CS, proposant des services de communication enrichie sur le coeur de réseau IP-CN (autrement dit, le serveur de messagerie E dispose de moyens de communication sur le réseau d'accès à commutation de circuits, sur le réseau d'accès à commutations de paquets et sur le coeur de réseau IMS), on privilégiera comme décrit précédemment les services permettant le dépôt de données multimédia en vue d'être stockées par le serveur de messagerie, comme par exemple le transfert de fichiers, le partage de photos ou de vidéo, etc.

De cette sorte, le terminal T1 peut déposer en parallèle ou en marge de la communication téléphonique (i.e. lors de l'enregistrement d'un message vocal), des données multimédia (fichiers, photos, vidéos, etc.) sur le serveur de messagerie du terminal T2 (i.e. sur l'équipement E) dans le cadre des services RCS-e.

Puis quand plus tard, le terminal T2 se connecte à son serveur de messagerie vocale E en mode consultation pour consulter le message vocal laissé par T1, il établit une communication téléphonique sur le réseau AN-CS et met en oeuvre la procédure de découverte des capacités RCS-e décrite précédemment (échange de messages SIP OPTIONS). Une fois les vérifications réalisées, le serveur de messagerie vocale E propose au terminal T2 de lui transmettre les fichiers, photos et images déposés par le terminal T1 en parallèle du dépôt du message vocal.

De même, en parallèle ou en marge de la communication téléphonique établie entre T1 et E, le serveur de messagerie E peut proposer au terminal T1 de lui transmettre des fichiers, vidéo et/ou photos préconfigurées pour le terminal T1 ou au contraire définies de manière générique pour un ensemble de terminaux.

## Revendications

1. Procédé d'échange d'informations mis en oeuvre par un premier équipement (T1) avec un deuxième équipement (E), lesdits premier et deuxième équipements étant enregistrés auprès d'un coeur de réseau de voix sur IP (IP-CN), ledit procédé comprenant :
- une étape d'émission (E40) par ledit premier équipement (T1) d'une communication sur un réseau à commutation de circuits (AN-CS) à destination d'un troisième équipement (T2) distinct du deuxième équipement (E) et qui a activé un renvoi des communications émises sur le réseau à commutation de circuits qui lui sont destinées vers le deuxième équipement (E) ;
- une étape d'établissement de la communication entre le premier équipement (T1) et le deuxième équipement (E), suite au renvoi de ladite communication du troisième équipement vers le deuxième équipement ;
- une étape de réception (E80), par le premier équipement (T1), sur le réseau à commutation de circuits, d'un message (M1) de confirmation de l'établissement de la communication avec le deuxième équipement (E), ce message de confirmation comportant un identifiant (IdE) du deuxième équipement sur le réseau à commutation de circuits ; et
- une étape (E100, E140, E160, E170, E180) d'échange d'informations par le premier équipement (T1) avec le deuxième équipement (E), via le coeur de réseau de voix sur IP, en utilisant l'identifiant (IdE) du deuxième équipement contenu dans le message de confirmation, ces informations étant relatives à une capacité du premier et/ou du deuxième équipement à supporter au moins un service multimédia dit de communication enrichie.

2. Procédé d'échange selon la revendication 1, dans lequel l'étape d'échange d'informations comporte :
- un envoi (E100) via le coeur de réseau de voix sur IP, par le premier équipement (T1) au deuxième équipement (E), en utilisant l'identifiant (IdE) contenu dans le message de confirmation, d'un message (M2) visant à connaître les services multimédia dits de communication enrichie supportés par le deuxième équipement ; et
- une réception (E140) par le premier équipement (T1), via le coeur de réseau de voix sur IP, d'un message (M3') de réponse du deuxième équipement (E) identifiant le cas échéant les services multimédia dits de communication enrichie supportés par le deuxième équipement.

3. Procédé d'échange selon la revendication 1, dans lequel l'étape d'échange d'informations comporte :
- une réception (E160) par le premier équipement (T1), via le coeur de réseau de voix sur IP, d'un message (M4') du deuxième équipement visant à connaître les services multimédia dit de communication enrichie supportés par ledit premier équipement ;
- une vérification (E170) par le premier équipement (T1) que ce message provient de l'équipement identifié dans le message de confirmation de l'établissement de la communication ; et
- en cas de vérification positive, un envoi (E180) par le premier équipement (T1), via le coeur de réseau de voix sur IP, d'un message de réponse (M5) au deuxième équipement identifiant le cas échéant les services multimédia dits de communication enrichie supportés par le premier équipement.

4. Procédé d'échange selon la revendication 1, dans lequel le message de confirmation (M1) est un message CONNECT défini par un service COLP (COnnected Line Présentation) disponible pour le premier équipement sur le réseau à commutation de circuits.

5. Procédé d'échange selon la revendication 1, dans lequel le deuxième équipement (E) est un terminal ou un serveur de messagerie vocale du réseau à commutation de circuits.

6. Procédé d'échange selon la revendication 2, dans lequel les services identifiés dans le message de réponse (M3) du deuxième équipement (E) sont des services compatibles avec la nature du deuxième équipement.

7. Programme d'ordinateur comportant des instructions pour l'exécution des étapes du procédé d'échange selon la revendication 1 lorsque ledit programme est exécuté par un ordinateur.

8. Support d'enregistrement lisible par un ordinateur sur lequel est enregistré un programme d'ordinateur comprenant des instructions pour l'exécution des étapes du procédé d'échange selon la revendication 1.

9. Equipement (T1), dit premier équipement, enregistré auprès d'un coeur de réseau de voix sur IP (IP-CN), ledit premier équipement (T1) comprenant :
- des moyens d'émission d'une communication via un réseau à commutation de circuits (AN-CS) à destination d'un troisième équipement (T2) qui a activé un renvoi des communications émises sur le réseau à commutation de circuits qui lui sont destinées vers un deuxième équipement (E) distinct du troisième équipement et enregistré auprès du coeur de réseau de voix sur IP ;
- des moyens d'établissement de la communication avec le deuxième équipement (E), suite au renvoi de ladite communication du troisième équipement vers le deuxième équipement;
- des moyens de réception (5) sur le réseau à commutation de circuits, d'un message (M1) de confirmation de l'établissement de la communication avec le deuxième équipement (E), ce message de confirmation comportant un identifiant (IdE) du deuxième équipement (E) sur le réseau à commutation de circuits ; et
- des moyens (6) d'échange d'informations avec le deuxième équipement (E), via le coeur de réseau de voix sur IP, aptes à utiliser l'identifiant du deuxième équipement (E) contenu dans le message de confirmation, ces informations étant relatives à une capacité du premier équipement (T1) et/ou du deuxième équipement (E) à supporter au moins un service multimédia dit de communication enrichie.

10. Equipement (T1) selon la revendication 9, **caractérisé en ce qu'**il constitue un terminal.

11. Equipement selon l'une quelconque des revendications 9 ou 10 **caractérisé en ce qu'**il comprend :
- des moyens d'envoi au deuxième équipement (E), via le coeur de réseau de voix sur IP, en utilisant l'identifiant (IdE) contenu dans le message de confirmation, d'un message (M2) visant à connaître les services multimédia dits de communication enrichie supportés par le deuxième équipement ;
- des moyens de réception, via le coeur de réseau de voix sur IP, d'un message (M3') de réponse du deuxième équipement (E) identifiant le cas échéant les services multimédia dits de communication enrichie supportés par le deuxième équipement.

12. Equipement selon l'une quelconque des revendications 9 ou 10 **caractérisé en ce qu'**il comprend :
- des moyens de réception, via le coeur de réseau de voix sur IP, d'un message (M4') du deuxième équipement visant à connaître les services multimédia dit de communication enrichie supportés par ledit premier équipement;
- des moyens de vérification que ce message provient de l'équipement identifié dans le message de confirmation de l'établissement de la communication ;
- des moyens d'envoi activés en cas de vérification positive, via le coeur de réseau de voix sur IP, d'un message de réponse (M5) au deuxième équipement identifiant le cas échéant les services multimédia dits de communication enrichie supportés par le premier équipement.

13. Système (1) comprenant :
- un premier équipement (T1) selon la revendication 9 enregistré auprès d'un coeur de réseau de voix sur IP (IP-CN) ; et
- un deuxième équipement enregistré auprès du coeur de réseau de voix sur IP ;
ledit premier équipement ayant émis une communication sur un réseau à commutation de circuits (AN-CS) à destination d'un troisième équipement (T2) distinct du deuxième équipement (E) qui a activé un renvoi des communications émises sur le réseau à commutation de circuits qui lui sont destinées vers le deuxième équipement (E), ladite communication ayant été renvoyée vers le deuxième équipement et établie avec le deuxième équipement.

14. Système (1) selon la revendication 13 dans lequel le deuxième équipement (E) est un terminal ou un serveur de messagerie vocale du réseau à commutation de circuits.

15. Serveur de messagerie vocale (E) d'un réseau à commutation de circuits (AN-CS), enregistré auprès d'un coeur de réseau de voix sur IP (IP-CN), ledit serveur de messagerie étant apte à mettre en oeuvre, en parallèle ou en marge d'une communication établie sur le réseau à commutation de circuits avec un équipement (T1) selon la revendication 9 ou 10, des services multimédia dits de communication enrichie.

## Patentansprüche

1. Informationsaustauschverfahren, das von einem ersten Gerät (T1) mit einem zweiten Gerät (E) angewendet wird, wobei das erste und das zweite Gerät bei einem Voice-over-IP-Kernnetz (IP-CN) registriert sind, wobei das Verfahren enthält:
- einen Schritt des Sendens (E40) einer Kommunikation über ein Leitungsvermittlungsnetz (AN-CS) vom ersten Gerät (T1) an ein drittes Gerät (T2), das sich vom zweiten Gerät (E) unterscheidet und das eine Umleitung der im Leitungsvermittlungsnetz gesendeten Kommunikationen, die für es bestimmt sind, an das zweite Gerät (E) aktiviert hat;
- einen Schritt des Aufbaus der Kommunikation zwischen dem ersten Gerät (T1) und dem zweiten Gerät (E) nach der Umleitung der Kommunikation vom dritten Gerät zum zweiten Gerät;
- einen Schritt des Empfangs (E80), durch das erste Gerät (T1) über das Leitungsvermittlungsnetz, einer Bestätigungsnachricht (M1) des Aufbaus der Kommunikation mit dem zweiten Gerät (E), wobei diese Bestätigungsnachricht eine Kennung (IdE) des zweiten Geräts im Leitungsvermittlungsnetz aufweist; und
- einen Schritt (E100, E140, E160, E170, E180) des Informationsaustauschs durch das erste Gerät (T1) mit dem zweiten Gerät (E), über das Voice-over-IP-Kernnetz, unter Verwendung der in der Bestätigungsnachricht enthaltenen Kennung (IdE) des zweiten Geräts, wobei diese Informationen sich auf eine Fähigkeit des ersten und/oder zweiten Geräts der Unterstützung mindestens eines Multimedia-Diensts sogenannter angereicherter Kommunikation beziehen.

2. Austauschverfahren nach Anspruch 1, wobei der Schritt des Informationsaustauschs aufweist:
- ein Senden (E100), über das Voice-over-IP-Kernnetz, vom ersten Gerät (T1) an das zweite Gerät (E) unter Verwendung der in der Bestätigungsnachricht enthaltenen Kennung (IdE) einer Nachricht (M2), die darauf abzielt, die Multimedia-Dienste sogenannter angereicherter Kommunikation kennenzulernen, die vom zweiten Gerät unterstützt werden; und
- einen Empfang (E140) vom ersten Gerät (T1), über das Voice-over-IP-Kernnetz, einer Antwortnachricht (M3') des zweiten Geräts (E), die ggf. die vom zweiten Gerät unterstützten Multimedia-Dienste sogenannter angereicherter Kommunikation bezeichnet.

3. Austauschverfahren nach Anspruch 1, wobei der Schritt des Informationsaustauschs aufweist:
- einen Empfang (E160), durch das erste Gerät (T1), über das Voice-over-IP-Kernnetz, einer Nachricht (M4') des zweiten Geräts, die darauf abzielt, die Multimedia-Dienste sogenannter angereicherter Kommunikation kennenzulernen, die vom ersten Gerät unterstützt werden;
- eine Überprüfung (E170), durch das erste Gerät (T1), dass diese Nachricht von dem in der Bestätigungsnachricht des Aufbaus der Kommunikation bezeichneten Gerät stammt; und
- im Fall einer positiven Überprüfung, ein Senden (E180), durch das erste Gerät (T1), über das Voice-over-IP-Kernnetz, einer Antwortnachricht (MS) an das zweite Gerät, die ggf. die vom ersten Gerät unterstützten Multimedia-Dienste sogenannter angereicherter Kommunikation bezeichnet.

4. Austauschverfahren nach Anspruch 1, wobei die Bestätigungsnachricht (M1) eine CONNECT-Nachricht ist, die von einem Dienst COLP (COnnected Line Presentation) definiert wird, der für das erste Gerät im Leitungsvermittlungsnetz verfügbar ist.

5. Austauschverfahren nach Anspruch 1, wobei das zweite Gerät (E) ein Endgerät oder ein Voicemail-Server des Leitungsvermittlungsnetzes ist.

6. Austauschverfahren nach Anspruch 2, wobei die in der Antwortnachricht (M3) des zweiten Geräts (E) bezeichneten Dienste Dienste sind, die mit der Beschaffenheit des zweiten Geräts kompatibel sind.

7. Computerprogramm, das Anweisungen zur Ausführung der Schritte des Austauschverfahrens nach Anspruch 1 aufweist, wenn das Programm von einem Computer ausgeführt wird.

8. Computerlesbarer Speicherträger, auf dem ein Computerprogramm gespeichert ist, das Anweisungen zur Ausführung der Schritte des Austauschverfahrens nach Anspruch 1 enthält.

9. Gerät (T1), erstes Gerät genannt, das bei einem Voice-over-IP-Kernnetz (IP-CN) registriert ist, wobei das erste Gerät (T1) enthält:
- Einrichtungen zum Senden einer Kommunikation über ein Leitungsvermittlungsnetz (AN-CS) an ein drittes Gerät (T2), das eine Umleitung der im Leitungsvermittlungsnetz gesendeten Kommunikationen, die für es bestimmt sind, an ein zweites Gerät (E) aktiviert hat, das sich vom dritten Gerät unterscheidet und beim Voice-over-IP-Kernnetz registriert ist;
- Einrichtungen zum Aufbau der Kommunikation mit dem zweiten Gerät (E) nach der Umleitung der Kommunikation vom dritten Gerät zum zweiten Gerät;
- Einrichtungen zum Empfang (5), im Leitungsvermittlungsnetz, einer Bestätigungsnachricht (M1) des Aufbaus der Kommunikation mit dem zweiten Gerät (E), wobei diese Bestätigungsnachricht eine Kennung (IdE) des zweiten Geräts (E) im Leitungsvermittlungsnetz aufweist; und
- Einrichtungen (6) zum Informationsaustausch mit dem zweiten Gerät (E) über das Voice-over-IP-Kernnetz, die die in der Bestätigungsnachricht enthaltene Kennung des zweiten Geräts (E) verwenden können, wobei diese Informationen sich auf eine Fähigkeit des ersten Geräts (T1) und/oder des zweiten Geräts (E) beziehen, mindestens einen Multimedia-Dienst sogenannter angereicherter Kommunikation zu unterstützen.

10. Gerät (T1) nach Anspruch 9, **dadurch gekennzeichnet, dass** es ein Endgerät bildet.

11. Gerät nach einem der Ansprüche 9 oder 10, **dadurch gekennzeichnet, dass** es enthält:
- Einrichtungen zum Senden an das zweite Gerät (E) über das Voice-over-IP-Kernnetz unter Verwendung der in der Bestätigungsnachricht enthaltenen Kennung (IdE) einer Nachricht (M2), die darauf abzielt, die Multimedia-Dienste sogenannter angereicherter Kommunikation kennenzulernen, die vom zweiten Gerät unterstützt werden;
- Einrichtungen zum Empfang, über das Voice-over-IP-Kernnetz, einer Antwortnachricht (M3') vom zweiten Gerät (E), die ggf. die vom zweiten Gerät unterstützten Multimedia-Dienste sogenannter angereicherter Kommunikation bezeichnet.

12. Gerät nach einem der Ansprüche 9 oder 10, **dadurch gekennzeichnet, dass** es enthält:
- Einrichtungen zum Empfang, über das Voice-over-IP-Kernnetz, einer Nachricht (M4') vom zweiten Gerät, die darauf abzielt, die vom ersten Gerät unterstützten Multimedia-Dienste sogenannter angereicherter Kommunikation kennenzulernen;
- Einrichtungen zur Überprüfung, dass diese Nachricht von dem in der Bestätigungsnachricht des Aufbaus der Kommunikation bezeichneten Gerät stammt;
- Sendeeinrichtungen, die im Fall einer positiven Überprüfung über das Voice-over-IP-Kernnetz aktiviert werden, einer Antwortnachricht (M5) an das zweite Gerät, die ggf. die vom ersten Gerät unterstützten Multimedia-Dienste sogenannter angereicherter Kommunikation bezeichnet.

13. System (1), das enthält:
- ein erstes Gerät (T1) nach Anspruch 9, das bei einem Voice-over-IP-Kernnetz (IP-CN) registriert ist; und
- ein zweites Gerät, das beim Voice-over-IP-Kernnetz registriert ist;
wobei das erste Gerät eine Kommunikation in einem Leitungsvermittlungsnetz (AN-CS) an ein drittes Gerät (T2) anders als das zweite Gerät (E) gesendet hat, das eine Umleitung der im Leitungsvermittlungsnetz gesendeten Kommunikationen, die für es bestimmt sind, an das zweite Gerät (E) aktiviert hat, wobei die Kommunikation zum zweiten Gerät umgeleitet und mit dem zweiten Gerät aufgebaut wurde.

14. System (1) nach Anspruch 13, wobei das zweite Gerät (E) ein Endgerät oder ein Voicemail-Server des Leitungsvermittlungsnetzes ist.

15. Voicemail-Server (E) eines Leitungsvermittlungsnetzes (AN-CS), registriert bei einem Voice-over-IP-Kernnetz (IP-CN), wobei der Mail-Server parallel zu oder am Rand einer Kommunikation, die im Leitungsvermittlungsnetz mit einem Gerät (T1) nach Anspruch 9 oder 10 aufgebaut wird, Multimedia-Dienste sogenannter angereicherter Kommunikation anwenden kann.

## Claims

1. Method of exchanging information implemented by a first device (T1) with a second device (E), said first and second devices being registered with a Voice over IP core network (IP-CN), said method comprising:
- a step (E40) of sending by said first device (T1) of a communication on a circuit switching network (AN-CS) destined for a third device (T2) distinct from the second device (E) and which has activated a redirection to the second device (E) of the communications intended for it which are sent on the circuit switching network;
- a step of establishing the communication between the first device (T1) and the second device (E), subsequent to a redirection of said communication of the third device to the second device;
- a step (E80) of receiving, by the first device (T1), on the circuit switching network, a message (M1) of confirmation of the establishment of the communication with the second device (E), this confirmation message comprising an identifier (IdE) of the second device on the circuit switching network; and
- a step (E100, E140, E160, E170, E180) of exchanging information by the first device (T1) with the second device (E), via the Voice over IP core network, by using the identifier (IdE) of the second device contained in the confirmation message, this information relating to a capability of the first and/or of the second device to support at least one so-called enhanced-communication multimedia service.

2. Method of exchanging according to Claim 1, in which the step of exchanging information comprises:
- a dispatching (E100) via the Voice over IP core network, by the first device (T1) to the second device (E), by using the identifier (IdE) contained in the confirmation message, of a message (M2) aimed at ascertaining the so-called enhanced-communication multimedia services supported by the second device; and
- a reception (E140) by the first device (T1), via the Voice over IP core network, of a message (M3') of response of the second device (E) identifying if relevant the so-called enhanced-communication multimedia services supported by the second device.

3. Method of exchanging according to Claim 1, in which the step of exchanging information comprises:
- a reception (E160) by the first device (T1), via the Voice over IP core network, of a message (M4') of the second device aimed at ascertaining the so-called enhanced-communication multimedia services supported by said first device;
- a verification (E170) by the first device (T1) that this message originates from the device identified in the communication establishment confirmation message; and
- in case of positive verification, a dispatching (E180) by the first device (T1), via the Voice over IP core network, of a response message (M5) to the second device identifying if relevant the so-called enhanced-communication multimedia services supported by the first device.

4. Method of exchanging according to Claim 1, in which the confirmation message (M1) is a CONNECT message defined by a COLP (COnnected Line Presentation) service available for the first device on the circuit switching network.

5. Method of exchanging according to Claim 1, in which the second device (E) is a terminal or a voice messaging server of the circuit switching network.

6. Method of exchanging according to Claim 2, in which the services identified in the response message (M3) of the second device (E) are services compatible with the nature of the second device.

7. Computer program comprising instructions for the execution of the steps of the method of exchanging according to Claim 1 when said program is executed by a computer.

8. Recording medium readable by a computer on which is recorded a computer program comprising instructions for the execution of the steps of the method of exchanging according to Claim 1.

9. Device (T1), termed first device, registered with a Voice over IP core network (IP-CN), said first device (T1) comprising:
- means for sending a communication via a circuit switching network (AN-CS) destined for a third device (T2) which has activated a redirection to a second device (E), distinct from the third device and registered with the Voice over IP core network, of the communications intended for it which are sent on the circuit switching network;
- means for establishing the communication with the second device (E), subsequent to a redirection of said communication of the third device to the second device;
- means (5) for receiving on the circuit switching network, a message (M1) of confirmation of the establishment of the communication with the second device (E), this confirmation message comprising an identifier (IdE) of the second device (E) on the circuit switching network; and
- means (6) for exchanging information with the second device (E), via the Voice over IP core network, which are able to use the identifier of the second device (E) contained in the confirmation message, this information relating to a capability of the first device (T1) and/or of the second device (E) to support at least one so-called enhanced-communication multimedia service.

10. Device (T1) according to Claim 9, **characterized in that** it constitutes a terminal.

11. Device according to either one of Claims 9 or 10, **characterized in that** it comprises:
- means for dispatching to the second device (E), via the Voice over IP core network, by using the identifier (IdE) contained in the confirmation message, a message (M2) aimed at ascertaining the so-called enhanced-communication multimedia services supported by the second device; and
- means for receiving, via the Voice over IP core network, a message (M3') of response of the second device (E) identifying if relevant the so-called enhanced-communication multimedia services supported by the second device.

12. Device according to either one of Claims 9 or 10, **characterized in that** it comprises:
- means for receiving, via the Voice over IP core network, a message (M4') of the second device aimed at ascertaining the so-called enhanced-communication multimedia services supported by said first device;
- means for verifying that this message originates from the device identified in the communication establishment confirmation message; and
- means for dispatching, activated in case of positive verification, via the Voice over IP core network, a response message (M5) to the second device identifying if relevant the so-called enhanced-communication multimedia services supported by the first device.

13. System (1) comprising:
- a first device (T1) according to Claim 9, registered with a Voice over IP core network (IP-CN); and
- a second device registered with the Voice over IP core network;
said first device having sent a communication on a circuit switching network (AN-CS) destined for a third device (T2) distinct from the second device (E) which has activated a redirection to the second device (E) of the communications intended for it which are sent on the circuit switching network, said communication having been redirected to the second device and established with the second device.

14. System (1) according to Claim 13, in which the second device (E) is a terminal or a voice messaging server of the circuit switching network.

15. Voice messaging server (E) of a circuit switching network (AN-CS), registered with a Voice over IP core network (IP-CN), said messaging server being able to implement, in parallel with or at the margin of a communication established on the circuit switching network with a device (T1) according to Claim 9 or 10, so-called enhanced-communication multimedia services.
